# EUROPÄISCHE PATENTANMELDUNG

(11) **EP 3 058 832 A2**
(43) Veröffentlichungstag der Anmeldung: **24.08.2016**
(21) Anmeldenummer: 16155548.7
(22) Anmeldetag: 12.02.2016
(51) Int. Cl.: A23K 40/20, A23K 10/30, A23K 50/75, A01K 15/02, A01K 39/01

(54) **GEFLÜGELSPIELZEUG SOWIE BEREITSTELLUNGSBEHÄLTER FÜR GEFLÜGELSPIELZEUGE**

(30) Priorität: 18.02.2015 DE 202015100780 U
(71) Anmelder: inno4cons GmbH, 40547 Düsseldorf (DE)
(72) Erfinder: Söffing, Claudius, 40629 Düsseldorf (DE)
(74) Vertreter: Albrecht, Ralf

(57) **Zusammenfassung**

Die vorliegende Erfindung betrifft ein Geflügelspielzeug, umfassend einen oder bestehend aus einem Presskörper (1, 2, 3), der Spelzen wenigstens einer Getreideart und/oder Stroh wenigstens einer Getreideart und/oder Heu aufweist. Weiterhin betrifft die Erfindung einen Bereitstellungsbehälter (4) für Geflügelspielzeuge, umfassend einen Vorratsbereich, in welchem mehrere Geflügelspielzeuge übereinander gestapelt vorgehalten werden können, und einen unterhalb des Vorratsbereiches vorgesehenen Bereitstellungsbereich, welcher derart ausgestaltet ist, dass ein in dem Bereitstellungsbereich befindliches Geflügelspielzeug von außen für Tiere zugänglich ist. Des Weiteren betrifft die Erfindung ein Kit umfassend wenigstens ein Geflügelspielzeug und einen Bereitstellungsbehälter, sowie die Verwendung eines Presskörpers (1, 2, 3), der Stroh wenigstens einer Getreideart und/oder Spelzen wenigstens einer Getreideart und/oder Heu aufweist, als Spielzeug für Geflügel.

## Beschreibung

Die Erfindung betrifft ein Geflügelspielzeug. Des Weiteren betrifft die Erfindung einen Bereitstellungsbehälter für Geflügelspielzeuge.

Spielzeuge für Haustiere, wie etwa Hunde oder Katzen, sind schon seit langer Zeit bekannt und kommen vielfach zum Einsatz, um die Tiere zu beschäftigen und auszulasten. Auch im Bereich der Nutztierhaltung hat sich herausgestellt, dass die Bereitstellung von Spielzeugen mit einer Vielzahl von Vorteilen verbunden ist.

Geflügel beispielsweise wird auf Bauernhöfen oder Farmen zum Teil in vergleichsweise beengten Räumlichkeiten gehalten. Dabei leben oftmals viele Tiere gemeinsam in einem Stall oder einem Innen- oder Außengehege. Die Umgebung, mit welchen die Tiere konfrontiert sind ist meistens sehr karg und es besteht keine Möglichkeit bzw. es bestehen nur wenige Möglichkeiten für die Tiere, sich in irgendeiner Art und Weise zu beschäftigen.

Bei dem Halten einer Vielzahl von Hühnern in einem gemeinsamen Käfig, Gehege bzw. Stall tritt dabei das Problem auf, dass die Tiere - u.a. aus Beschäftigungsmangel - einander picken. Das Picken kann dabei harmloser Natur sein. Teilweise werden hierdurch jedoch auch schwere Verletzungen verursacht.

Es ist bekannt, dass die Rate, mit der die Tiere einander picken reduziert werden kann, indem den Tieren in ihrer Umgebung Spielzeuge zur Verfügung gestellt werden. Die Spielzeuge sollen die Tiere dazu bewegen, ihre Aufmerksamkeit und ihr Picken auf diese zu richten und infolge dessen von den ebenfalls im Stall befindlichen anderen Tieren abzusehen. Darüber hinaus bewirkt die Bereitstellung von Spielzeuge neben der Vermeidung von Verletzungen auch eine Verbesserung zahlreicher Faktoren, wie der Lebenserwartung und der Legeleistung der Tiere, da ein gewisses Maß an Stimulation durch äußere Einflüsse den Tieren gut tut.

Aus der WO 93/02551 beispielsweise geht ein Spielzeug für Geflügel hervor, welches dem Picken der Tiere untereinander entgegenwirken und den Allgemeinzustand der Tiere verbessern soll. Das offenbarte Spielzeug umfasst eine Konstruktion mit einem Rahmenelement sowie mehreren an dem Rahmenelement befestigten bewegliche Elementen. Das Spielzeug besteht dabei aus Plastik und Metall. Die beweglichen Elemente dienen dem Zweck, dass infolge des Pickens diese von den Tieren in Bewegung versetzt werden können, wodurch die Tiere beschäftigt werden. Bei dem offenbarten Spielzeug weisen die einzelnen Komponenten ferner unterschiedliche Farben auf. Hierdurch soll eine bestimmte Stimulation der Tiere bewirkt werden, was wiederum in eine Erhöhung der Leistung der Tiere, beispielsweise des Eiergewichtes, der Anzahl der gelegten Eier sowie der Lebenserwartung der Tiere resultieren soll.

Das aus dem Stand der Technik bekannte Spielzeug für Geflügel hat sich prinzipiell bewährt. Es wird jedoch teilweise als nachteilig erachtet, dass dieses vergleichsweise aufwendig und teuer in der Fertigung ist.

Ausgehend von dem vorgenannten Stand der Technik ist es daher eine Aufgabe der vorliegenden Erfindung ein alternatives Geflügelspielzeug bereit zu stellen, welches sich auf besonders einfache Weise herstellen lässt und gleichzeitig eine zuverlässige Beschäftigungsmöglichkeit für die Tiere darstellt.

Diese Aufgabe wird gelöst durch Geflügelspielzeug, umfassend einen Presskörper, der Spelzen wenigstens einer Getreideart und/oder Stroh wenigstens einer Getreideart und/oder Heu aufweist.

Darüber hinaus wird die Aufgabe gelöst durch ein Geflügelspielzeug, bestehend aus einem Presskörper, der Spelzen wenigstens einer Getreideart und/oder Stroh wenigstens einer Getreideart und/oder Heu aufweist.

Die vorliegende Erfindung beruht mit anderen Worten auf der Idee, Heu und/oder die Getreidebestandteile Spelzen und/oder Stroh gezielt zu nutzen, um einen Presskörper herzustellen und diesen Presskörper den Tieren in ihrer Umgebung zur Verfügung zu stellen, damit sie diesen Picken und sich mit diesem beschäftigen können.

Es hat sich gezeigt, dass ein Presskörper, welcher Spelzen und/oder Stroh genau einer oder auch mehrerer Getreidearten und/oder Heu aufweist, besonders geeignet ist, um als ein Beschäftigungsmittel für Geflügel, bei dem es sich beispielsweise um Hühner, Hähne und/oder Puten handeln kann, zu dienen.

Bei Spelzen, Stroh und Heu handelt es sich um rein natürliche Materialien, welche für die Tiere völlig unschädlich sind.

Bei den erfindungsgemäß zum Einsatz kommenden Spelzen handelt es sich insbesondere um die Hülsen der Getreidekörner der jeweiligen Getreideart. Ein großer Vorteil der Spelzen besteht darin, dass dieser im Rahmen von Produktions- bzw. Verarbeitungsprozessen nicht oder nur in vergleichsweise geringem Maße mit Schimmelpilzen oder Keimen, wie etwa Salmonellen kontaminiert wird. Die erfindungsgemäße Verwendung von Spelzen ermöglicht es daher, dass ein besonders hygienisches Geflügelspielzeug erhalten wird.

Das erfindungsgemäß zum Einsatz kommende Heu sowie die Getreidebestandteile Spelzen und Stroh haben sich als besonders geeignet erwiesen, um die Tiere zum Picken des erfindungsgemäßen Presskörpers zu veranlassen. Im Gegensatz zu einem Spielzeug aus Metall oder Plastik stellt ein Presskörper mit diesen natürlichen Materialien keinen Fremdkörper für die Tiere dar.

Spelzen und Stroh fallen ferner im Rahmen der Getreideverarbeitung teilweise ohnehin als Neben- bzw. Abfallprodukte an, so dass diese auch besonders günstig erhalten werden können.

Ein weiterer Vorteil des erfindungsgemäßen Geflügelspielzeugs besteht darin, dass gegenüber dem Stand der Technik nicht nur sehr kostengünstige sondern erheblich umweltfreundlichere Materialien zum Einsatz kommen. Das erfindungsgemäße Geflügelspielzeug kann vollständig aus natürlichen Materialen hergestellt werden. Auf Kunststoff oder Metalle kann in vollem Umfang verzichtet werden.

Die erfindungsgemäß verwendeten Spelzen und/oder das verwendete Heu und/oder das verwendete Stroh eignen sich ferner gut, um aus diesen, gegebenenfalls in Kombination mit weiteren Materialien, einen Presskörper einer beliebigen geeigneten Form herzustellen. Ein Presskörper kann durch Verdichten des Ausgangsmaterials erhalten werden, wobei die üblichen Pelletier- und/oder Bricketierverfahren und dafür benötigten Vorrichtungen zum Einsatz kommen können.

Im Ergebnis kann auf besonders kostengünstige Weise ein Presskörper erhalten werden, welcher den Tieren im einem Stall oder Gehege oder dergleichen zur Verfügung gestellt werden kann, indem dieser beispielsweise auf den Boden gelegt oder anderweitig bereitgestellt wird.

Die Tiere werden durch die erfindungsgemäß verwendeten Materialien zum Picken des Presskörpers angeregt, wobei sie beispielsweise auch versuchen können, einzelne Hälme oder Spelzen bzw. Teile dieser mit dem Schnabel zu Fassen zu bekommen. Die Tiere können den Presskörper alternativ oder zusätzlich durch den Stall bzw. das Gehege bewegen, was sie ebenfalls beschäftigt hält. Die erfindungsgemäß verwendeten Materialien sind dabei besonders umweltfreundlich und für den direkten Kontakt mit den Tieren sehr gut geeignet.

Der Presskörper, welcher das erfindungsgemäße Geflügelspielzeug bildet bzw. welchen das erfindungsgemäße Geflügelspielzeug umfasst, kann beispielsweise vollständig aus Spelzen oder vollständig aus Stroh einer oder mehrerer Getreidearten oder auch vollständig aus Heu bestehen, welches jeweils in eine beliebige Form gepresst werden kann, um den Presskörper zu erhalten.

Alternativ kann der Presskörper aus einer Mischung von zwei oder auch allen drei dieser Bestandteile bestehen.

Es ist ferner möglich, dass neben Spelzen und/oder Stroh und/oder Heu, jeweils in Alleinstellung oder in Mischung, noch weitere Materialien in dem Presskörper enthalten sind.

Eine Ausführungsform des erfindungsgemäßen Geflügelspielzeuges zeichnet sich dadurch aus, dass der Presskörper zu mindestens 20 Volumenprozent, insbesondere mindestens 30 Volumenprozent, bevorzugt mindestens 50 Volumenprozent und besonders bevorzugt mindestens 80 Volumenprozent aus Spelzen wenigstens einer Getreideart oder Stroh wenigstens einer Getreideart oder Heu besteht.

Auch kann der Presskörper vollständig, also zu 100 Volumenprozent aus Spelzen wenigstens einer Getreideart oder Stroh wenigstens einer Getreideart oder Heu bestehen.

Gemäß einer weiteren Ausführungsform ist vorgesehen, dass der Presskörper zu mindestens 20 Volumenprozent, insbesondere mindestens 30 Volumenprozent, bevorzugt mindestens 50 Volumenprozent und besonders bevorzugt mindestens 80 Volumenprozent aus einer Mischung aus Spelzen wenigstens einer Getreideart und/oder Stroh wenigstens einer Getreideart und/oder Heu besteht.

Auch kann der Presskörper vollständig, also zu 100 Volumenprozent aus einer Mischung aus Spelzen wenigstens einer Getreideart und/oder Stroh wenigstens einer Getreideart und/oder Heu bestehen.

Diese Anteile der erfindungsgemäß zum Einsatz kommenden Bestandteile haben sich als besonders geeignet für ein erfindungsgemäßes Geflügelspielzeug erwiesen.

Bei den Spelzen und/oder dem Stroh in einem erfindungsgemäßen Presskörper kann es sich ferner um solches genau einer beliebigen Getreideart handeln, oder aber es können Spelzen und/oder Stroh mehrerer verschiedener Getreidearten in einem Presskörper enthalten sein.

Es können dabei Spelzen und/oder Stroh beliebiger Getreidearten zum Einsatz kommen. Gemäß einer Ausführungsform ist vorgesehen, dass es sich bei der wenigstens einen Getreideart um Dinkel und/oder Hafer und/oder Weizen und/oder Roggen und/oder Gerste und/oder Raps und/oder Miscanthus und/oder Hirse und/oder Reis und/oder Sorgum handelt.

Das Stroh und/oder die Spelzen und/oder das Heu kann generell im unverarbeiteten Zustand zum Einsatz kommen, um einen Presskörper für das erfindungsgemäße Geflügelspielzeug zu erhalten. Beispielsweise können ganze Strohhalme und/oder ganze Spelzen und/oder unzerkleinertes Heu gepresst werden.

Alternativ oder zusätzlich kann vorgesehen sein, dass das Stroh und/oder die Spelzen der wenigstens einen Getreideart und/oder das Heu gehäckselt und/oder gemahlen sind. Gemäß dieser Ausführungsform werden Spelzen und/oder Stroh und/oder Heu im weiterverarbeiteten, insbesondere zerkleinerten Zustand herangezogen, um aus diesen einen Presskörper herzustellen.

Neben dem erfindungsgemäß zum Einsatz kommenden Spelzen und/oder Stroh und/oder Heu können in dem Presskörper auch andere Bestandteile enthalten sein. So ist in Weiterbildung der Erfindung vorgesehen, dass der Presskörper Futtermittel und/oder Mineralien und/oder pelletier Hilfsstoffe und/oder Sand und/oder Kräuter aufweist.

Eine weitere Ausführungsform zeichnet sich dadurch aus, dass der Presskörper wenigstens ein ätherisches Öl, insbesondere Zimt-Öl und/oder Pfefferminz-Öl und/oder Eukalyptus-Öl und/oder Oregano-Öl und/oder Lavendel-Öl und/oder Thymian-Öl aufweist.

Dabei kann vorgesehen sein, dass die Dosierung des wenigstens ein ätherischen Öles derart ist, dass 200 bis 1000 ml des ätherischen Öls bzw. 200 bis 1000 ml einer Mischung aus zwei oder mehr ätherischen Ölen je 1000 Kilogramm Presskörpermaterial enthalten sind.

Die pelletier Hilfsstoffe können dabei den Pelletierungsvorgang zur Herstellung des Presskörpers begünstigen. Die ätherischen Öle und Kräuter können die Tiere anlocken und diese dazu veranlassen, sich mit dem erfindungsgemäßen Geflügelspielzeug zu beschäftigen. Die Futtermittel und Mineralstoffe können einer besonders guten und ausgewogenen Ernährung dienen. Sind solche vorgesehen, kommt es insbesondere zumindest teilweise zu einem Verzehr des Presskörpers durch die Tiere. Sand kann beispielsweise als Füllstoff und/oder für die Schnabelpflege der Tiere zum Einsatz kommen.

Gemäß einer weiteren vorteilhaften Ausführungsform ist ferner vorgesehen, dass der Spelzen wenigstens einer Getreideart und/oder das Stroh wenigstens einer Getreideart und/oder das Heu mit wenigstens einer Säure benetzt und/oder zumindest teilweise durchsetzt ist, wobei es sich bei der wenigstens einen Säure insbesondere um Essigsäure und/oder Peressigsäure und/oder Milchsäure und/oder Ameisensäure und/oder Propionsäure und/oder Sorbinsäure und/oder Phosphorsäure handelt.

Es hat sich gezeigt, dass unter Verwendung von einer oder mehreren Säuren im Rahmen der Tierhaltung hervorragende Hygienebedingungen erzielt werden können. Sind der Spelzen beziehungsweise das Stroh beziehungsweise das Heu des Presskörpers erfindungsgemäß mit einer Säure bzw. einer Kombination von mehreren Säuren benetzt und/oder zumindest teilweise durchsetzt, zeichnet sich das erfindungsgemäße Geflügelsielzeug durch einen besonders geringen Gehalt an Pilzen und/oder Bakterien und/oder Viren aus. Vor allem der Gehalt an Aspergillen und/oder Salmonellen ist deutlich reduziert, kann insbesondere unterhalb der entsprechenden Nachweisgrenzen liegen. Der Gehalt an Schimmelpilzen, insbesondere Aspergillen, liegt bevorzugt unterhalb von 2000 KbE (koloniebildenden Einheiten) pro Gramm des Presskörpermaterials.

Kommt ein Geflügelspielzeug mit einem Presskörper mit Spelzen und/oder Stroh und/oder Heu zum Einsatz, die erfindungsgemäß mit wenigstens einer Säure benetzt und/oder zumindest teilweise durchsetzt sind, wird insbesondere zuverlässig vermieden, dass eine Kontamination des Geflügels und/oder Geflügelfutters mit Pilzen und/oder Bakterien und/oder Viren über das erfindungsgemäße Geflügelspielzeug bedingt wird. Im Ergebnis wird eine Tierhaltung und erheblich verbesserten hygienischen Bedingungen möglich.

In besonders vorteilhafter Ausgestaltung sind sowohl der Spelzen als auch das Stroh als auch das Heu, sofern in einem erfindungsgemäßen Geflügelspielzeug vorhanden, mit wenigstens einer Säure benetzt und/oder zumindest teilweise durchsetzt.

Spelzen bzw. Stroh bzw. Heu, die mit wenigstens einer Säure benetzt und/oder zumindest teilweise durchsetzt sind, können erfindungsgemäß beispielsweise erhalten werden, indem der Spelzen und/oder das Stroh und/oder das Heu mit der wenigstens einen Säure oder aber einer wässrigen Lösung der wenigstens einen Säure auf geeignete Weise in Kontakt gebracht werden. Beispielsweise können der Spelzen und/oder das Stroh und/oder das Heu mit der wenigstens einen Säure bzw. einer wässrigen Lösung dieser besprüht werden, bevor diese Materialien zum Erhalt des Presskörpers - gegebenenfalls zusammen mit weiteren Materialien bzw. Zusätzen - verpresst werden. Der Spelzen und/oder das Stroh und/oder das Heu können vorteilhafter Weise während des Besprühens durchmischt werden, um eine gleichmäßige Verteilung zu erzielen.

Der Spelzen und/oder das Stroh und/oder das Heu können beispielsweise mit einer wässrigen Lösung der wenigstens einen Säure in Kontakt gebracht werden, die eine Konzentration von 0,2 bis 1 %, insbesondere 0,2 bis 2 %, bevorzugt 0,2 bis 3 %. Diese Werte haben sich als besonders geeignet erwiesen.

Insbesondere liegt die Konzentration der wässrigen Lösung auch dann in den vorgenannten Bereichen, wenn eine wässrige Lösung aus einer Mischung aus mehreren Säuren zum Einsatz kommt.

Bei der wenigstens einen Säure kann es sich zum Beispiel um Essigsäure und/oder Peressigsäure und/oder Milchsäure und/oder Ameisensäure und/oder Propionsäure und/oder Sorbinsäure und/oder Phosphorsäure handeln. Diese Säuren haben sich als besonders geeignet erwiesen, um Pilze und/oder Bakterien und/oder Viren zu töten, die sich an bzw. in Spelzen und/oder Stroh und/der Heu befinden.

Peressigsäure beispielsweise wirkt sowohl bakterizid als auch fungizid. Mit Peressigsäure kann daher der Salmonellen- und der Schimmelpilzgehalt in bzw. an den Spelzen und/oder dem Stroh und/oder dem Heu reduziert werden. Demgemäß kann Peressigsäure in Alleinstellung zur Anwendung kommen, so dass gemäß einer Ausführungsform der Spelzen und/oder das Stroh und/oder das Heu ausschließlich mit Peressigsäure benetzt und/oder zumindest teilweise durchsetzt ist.

Alternativ dazu, dass Peressigsäure allein Verwendung findet, kann diese auch mit einer oder mehreren weiteren Säuren kombiniert werden oder es können Kombinationen anderer Säuren zum Einsatz kommen.

So kann vorgesehen sein, dass der Spelzen und/oder das Stroh und/oder das Heu mit einer Mischung aus mehreren Säuren benetzt und/oder zumindest teilweise durchsetzt ist.

Eine Mischung von zwei oder mehr Säuren hat sich als besonders geeignet erwiesen, um eine optimale Reduktion von Bakterien und/oder Viren und/oder Pilzen zu erzielen. Dem Fachmann ist dabei klar, dass eine Kombination von zwei oder mehr Säuren insbesondere dann zweckmäßig ist, wenn es sich bei den Säuren um solche handelt, die - jeweils für sich - nur fungizid oder bakterizid oder viruzid wirken, jedoch eine Reduktion von Bakterien und Schimmelpilzen oder von Bakterien und Viren oder von Schimmelpilzen und Viren oder von allen dreien gewünscht bzw. erforderlich ist. Insbesondere kann mit einer geeigneten Kombination mehrerer Säuren, die beispielsweise jeweils nur fungizid oder bakterizid sind sowohl der Salmonellen als auch der Aspergillenwert besonders zuverlässig auf einen niedrigen Wert gebracht werden. Soll auch der Virengehalt reduziert werden, kann beispielsweise eine weitere Säure hinzugenommen werden. Im Ergebnis kann auch über eine Kombination von zwei oder mehr Säuren ein Geflügelspielzeug erhalten werden, welches besonders hohen Hygieneanforderungen gerecht wird.

Eine bevorzugte Mischung von Säuren umfasst beispielsweise Ameisensäure und Propionsäure, insbesondere Ameisensäure und Propionsäure und Essigsäure, bevorzugt Ameisensäure und Propionsäure und Essigsäure und Sorbinsäure.

Eine weitere Ausführungsform des erfindungsgemäßen Geflügelspielzeugs zeichnet sich dadurch aus, dass der Spelzen wenigstens einer Getreideart und/oder das Stroh wenigstens einer Getreideart und/oder das Heu mit Ammoniumpropionat und/oder Ammoniumformiat benetzt und/oder zumindest teilweise durchsetzt ist. Ammoniumpropionat und/oder Ammoniumformiat haben sich ebenfalls als geeignet erwiesen, um erfindungsgemäß den Gehalt an Erregern in Spelzen und/oder Stroh und/oder Heu zu reduzieren.

Der Presskörper, der das erfindungsgemäße Geflügelspielzeug bildet, bzw. welchen das erfindungsgemäße Geflügelspielzeug umfasst, kann generell eine beliebige Form aufweisen.

Gemäß einer Ausführungsform weist der Presskörper eine zylinderförmige Grundform auf.

Was die Dimensionierung eines Presskörpers mit zylinderförmiger Grundform angeht, kann dabei vorgesehen sein, dass der Presskörper eine Höhe im Bereich von 10 mm bis 500 mm und/oder einen Durchmesser im Bereich von 5 mm bis 500 mm, insbesondere im Bereich von 50 mm bis 150 mm aufweist.

Alternativ zu einer zylinderförmigen Grundform kann auch vorgesehen sein, dass der Presskörper eine quaderförmige Grundform aufweist.

Ein Presskörper mit quaderförmiger Grundform kann dabei scharfe Kanten und/oder Ecken aufweisen. Alternativ dazu kann der Presskörper gerundete Kanten und/oder Ecken aufweisen.

Hinsichtlich der Dimensionierung eines Presskörpers mit quaderförmiger Grundform kann ferner vorgesehen sein, dass der Presskörper eine Länge im Bereich von 10 mm bis 1.000 mm und/oder eine Breite im Bereich von 5 mm bis 500 mm und/oder eine Höhe im Bereich von 10 mm bis 500 mm aufweist.

Selbstverständlich kann der Presskörper auch eine würfelförmige Grundform aufweisen. Die Kantenlänge des Presskörpers liegt dann beispielsweise im Bereich von 10 mm bis 1000 mm.

Es kann auch vorgesehen sein, dass der erfindungsgemäße Presskörper eine kugelförmige Grundform aufweist, wobei der Durchmesser des Presskörpers dann beispielsweise im Bereich von 5 mm bis 500 mm liegen kann.

Dem Fachmann ist klar, dass der Presskörper die exakte Form eines Quaders, Würfels, einer Kugel oder eines Zylinders aufweisen kann. Alternativ dazu kann dieser auch lediglich eine Form aufweisen, die in etwa der Form einer dieser geometrischen Körper entspricht. Beispielsweise kann der Körper eine quaderförmige, würfelförmige oder zylinderförmige Grundform aufweisen, wobei an dessen Außenseiten Verzierungen vorgesehen sind, welche dem Presskörper ein besonders ansprechendes Aussehen geben. Der Presskörper kann auch mit einer Oberflächenstruktur versehen sein, welche das Geflügel dazu veranlasst, dem Presskörper zu picken, bzw. welche das Picken erleichtert.

Ein weiterer Gegenstand der vorliegenden Erfindung ist ferner ein Bereitstellungsbehälter für Geflügelspielzeuge gemäß der vorliegenden Erfindung, umfassend einen Vorratsbereich, in welchem mehrere erfindungsgemäße Geflügelspielzeuge übereinander gestapelt vorgehalten werden können, und einen unterhalb des Vorratsbereiches vorgesehenen Bereitstellungsbereich, welcher derart ausgestaltet ist, dass ein in dem Bereitstellungsbereich befindliches Geflügelspielzeug von außen für Tiere zugänglich ist.

Der erfindungsgemäße Bereitstellungsbehälter hat sich als besonders geeignet erwiesen, um mehre Geflügelspielzeuge z.B. in einem Stall für das Geflügel auf besonders geeignete Weise, insbesondere nacheinander bereit zu stellen.

Dabei können in dem Vorratsbereich des Bereitstellungsbehälters mehrere Geflügelspielzeuge übereinandergestapelt vorgehalten werden, so dass ein Nachlegen von Geflügelspielzeugen nur in vergleichsweise langen Zeitabständen nötig ist. Werden die Geflügelspielzeuge von einem erfindungsgemäß ausgestalteten Presskörper gebildet, so sind die Presskörper in dem Vorratsbereich unmittelbar aufeinanderliegend in dem Vorratsbereich vorgesehen.

Aus dem Vorratsbereich können die Geflügelspielzeuge in den unterhalb des Vorratsbereiches vorgesehenen Bereitstellungsbereich, welcher von außen zugänglich ist, hineinrutschen bzw. fallen. Dies geschieht immer dann, wenn der Presskörper des Geflügelspielzeugs, welches zuvor in dem Bereitstellungsbereich vorgesehen war, aufgebraucht ist. Das Aufbrauchen wird dadurch bedingt, dass der Presskörper von dem Geflügel vollständig aufgepickt bzw. zerlegt wird.

Durch das nachrutschen eines neuen Geflügelspielzeugs, insbesondere Presskörpers, ist gewährleistet, dass der Bereitstellungsbereich immer automatisch mit einem neuen Geflügelspielzeug bzw. Presskörper befüllt wird, wenn das bzw. der alte verbraucht ist.

Eine Ausführungsform des erfindungsgemäßen Bereitstellungsbehälters zeichnet sich dadurch aus, dass eine Wandung des Bereitstellungsbehälters in dem Bereitstellungsbereich wenigstens eine Öffnung aufweist, durch welche ein in dem Bereitstellungsbereich befindliches Geflügelspielzeug von außen für Tiere zugänglich ist.

Es kann ferner vorgesehen sein, dass der erfindungsgemäße Bereitstellungsbehälter einen den Vorratsbereich definierenden rohrförmigen Körper, dessen untere Stirnseite offen ausgebildet ist und eine den Bereitstellungsbereich definierende, sich an das untere Ende des rohrförmigen Körpers anschließende offene Struktur, durch welche ein in dem Bereitstellungsbereich befindliches Geflügelspielzeug von außen für Tiere zugänglich ist, umfasst.

Die den Bereitstellungsbereich definierende offene Struktur kann zum Beispiel durch einen oder mehrere gebogene Drähte oder Stege gebildet werden. Eine solche Ausgestaltung hat sich als besonders geeignet erwiesen, um einerseits ein erfindungsgemäßes Geflügelspielzeug unterhalb des Vorratsbereiches zu halten und es gleichzeitig den Tieren zu ermöglich, den Presskörper des Geflügelspielzeugs von außen zu picken.

Bei den Drähten kann es sich zum Beispiel um solche aus Metall oder auch aus Kunststoff handeln. In gleicher Weise können die Stege beispielsweise aus einem dieser beiden Materialien bestehen.

Die offene Struktur kann darüber hinaus an dem unteren Ende des rohrförmigen Körpers lösbar befestigt sein, so dass diese abgenommen werden kann, um den Bereitstellungsbehälter von der Unterseite mit Geflügelspielzeugen zu befüllen. Hierfür wir die offene Struktur abgenommen, der Behälter wird umgedreht und es werden neue Geflügelspielzeuge in den Vorratsbereich eingelegt.

Alternativ oder zusätzlich kann der rohrförmige Körper an seiner oberen Stirnseite offen ausgebildet sein, so dass der Bereitstellungsbehälter von der Oberseite mit Geflügelspielzeugen befüllt werden kann. Bei dieser Ausgestaltung ist es nicht erforderlich, dass die offene Struktur von dem rohrförmigen Körper entfernt wird. Neue Geflügelspielzeuge können einfach von oben durch die offene Stirnseite des rohrförmigen Körpers in diesen eingelegt werden.

Der rohrförmige Körper weist zum Beispiel einen runden oder quadratischen oder rechteckigen Querschnitt auf. Zweckmäßiger Weise kommt ein erfindungsgemä0en Bereitstellungsbehälter mit einem den Vorratsbereich definierenden rohrförmigen Körper zum Einsatz, dessen Querschnitt an den Querschnitt der Geflügelspielzeuge, insbesondere Presskörper angepasst ist, die in diesem übereinandergestapelt vorgehalten werden sollen. In gleicher Weise ist in zweckmäßiger Ausgestaltung auch der Querschnitt der rohrförmigen Struktur an den Querschnitt der jeweils verwendeten Geflügelspielzeuge, insbesondere Presskörper angepasst.

Der rohrförmige Körper kann ferner eine Länge im Bereich von 300 mm bis 700 mm, insbesondere im Bereich von 400 mm bis 600 mm haben. Der Durchmesser des rohrförmigen Körpers kann im Bereich von 50 mm bis 110 mm, insbesondere im Bereich von 60 mm bis 100 mm liegen. Diese Maße haben sich als besonders geeignet erwiesen, um Geflügelspielzeuge geeigneter Größe in ausreichender Menge vorzuhalten und bereitzustellen.

Der erfindungsgemäße Bereitstellungsbehälter weist in einer besonders vorteilhaften Ausgestaltung Mittel zum Aufhängen des Bereitstellungsbehälters auf. Gemäß dieser Ausführungsform kann der Bereitstellungsbehälter beispielsweise in einem Stall oder einem Innen- bzw. Außengehege derart aufgehängt werden, dass die Tiere den Bereitstellungsbereich des Behälters erreichen können. Wenn das Geflügel ein in dem Bereitstellungsbereich befindliches Geflügelspielzeug von außen pickt, wird der hängende Bereitstellungsbehälter in Schwingung versetzt und die Tiere werden hierdurch stimuliert und in besonderem Maße beschäftigt.

Noch ein weiterer Gegenstand der vorliegenden Erfindung ist ferner ein Kit umfassend wenigstens ein Geflügelspielzeug gemäß der vorliegenden Erfindung und einen erfindungsgemäße Bereitstellungsbehälters für Geflügelspielzeuge. Unter Verwendung eines erfindungsgemäßen Kits können die Geflügelspielzeuge aus besonders geeignete Weise in einem Stall oder Gehege zur Beschäftigung der Tiere bereitgestellt werden. Selbstverständlich ist es möglich, dass zusätzlich zu den Geflügelspielzeugen, die in den Bereitstellungsbehältern bereitgestellt werden, erfindungsgemäße Geflügelspielzeuge auch lose zur Verfügung gestellt, beispielsweise einfach auf den Stalloder Gehegeboden ausgelegt werden, um die Tiere zu beschäftigen.

Schließlich betrifft die Erfindung die Verwendung eines Presskörpers, der Stroh wenigstens einer Getreideart und/oder Spelzen wenigstens einer Getreideart und/oder Heu aufweist, als Spielzeug für Geflügel.

Weitere Merkmale und Vorteile der vorliegenden Erfindung werden anhand der nachfolgenden Beschreibung dreier Ausführungsformen des erfindungsgemäßen Geflügelspielzeuges sowie einer Ausführungsform eines erfindungsgemäßen Bereitstellungsbehälters für Geflügelspielzeuge unter Bezugnahme auf die beiliegende Zeichnung deutlich.

Darin zeigt
- Figur 1: eine erste Ausführungsform eines erfindungsgemäßen Geflügelspielzeugs bestehend aus einem Presskörper mit zylindrischer Grundform,
- Fig. 2: eine zweite Ausführungsform eines erfindungsgemäßen Geflügelspielzeugs bestehend aus einem Presskörper mit würfelförmiger Grundform,
- Fig. 3: eine dritte Ausführungsform eines erfindungsgemäßen Geflügelspielzeugs bestehend aus einem Presskörper mit quaderförmiger Grundform, und
- Fig. 4: eine Ausführungsform eines erfindungsgemäßen Bereitstellungsbehälters für die in Figur 1 gezeigten Geflügelspielzeuge mit zylinderförmiger Grundform.

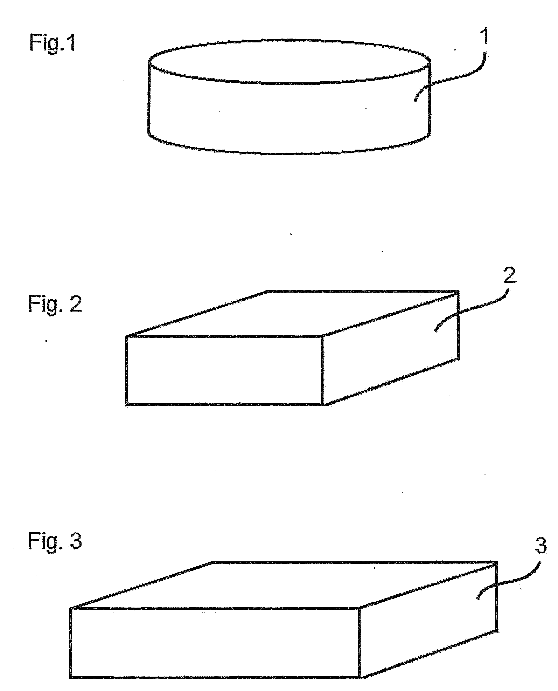

Die Figur 1 zeigt eine erste Ausführungsform eines erfindungsgemäßen Geflügelspielzeugs. Das Geflügelspielzeug besteht aus einem Presskörper 1 mit zylindrischer Grundform. Der Presskörper 1 hat eine Höhe von 50 mm und einen Durchmesser von 80 mm.

Der Presskörper 1 besteht vollständig, also zu 100 Volumenprozent, aus Dinkelspelzen.

Der Presskörper 1 wurde hergestellt, indem die Dinkelspelzen im unzerkleinerten Zustand unter Verwendung einer geeigneten Vorrichtung in die zylindrische Form der angegebenen Dimensionierung bricketiert wurden.

Alternativ zu der dargestellten Ausführungsform kann der Presskörper beispielsweise auch zu 100 Volumenprozent aus Haferspelzen oder Gerstenspelzen oder Hirsespelzen oder Sorghumspelzen oder Reisspelzen bestehen. Ferner kann alternativ dazu, dass der Spelzen im unzerkleinerten Zustand gepresst wird beispielsweise auch vorgesehen sein, dass Spelzen im gehäckselten und/oder gemahlenen Zustand gepresst wird, um den Presskörper zu erhalten.

Die Figur 2 zeigt eine zweite Ausführungsform eines erfindungsgemäßen Geflügelspielzeugs. Das Geflügelspielzeug besteht aus einem Presskörper 2 mit würfelförmiger Grundform. Der Presskörper 2 hat eine Kantenlänge von 50 mm.

Der Presskörper 2 besteht vollständig, also zu 100 Volumenprozent, aus Weizenstroh.

Der Presskörper 2 wurde hergestellt, indem das Weizenstroh im unzerkleinerten Zustand unter Verwendung einer geeigneten Vorrichtung in die würfelförmige Form der angegebenen Dimensionierung bricketiert wurde.

Alternativ zu der dargestellten Ausführungsform kann der Presskörper 2 auch zu 100 Volumenprozent aus Roggenstroh oder Gerstenstroh bestehen. Ferner kann alternativ dazu, dass das Stroh im unzerkleinerten Zustand gepresst wird beispielsweise auch vorgesehen sein, dass das Stroh im gehäckselten und/oder gemahlenen Zustand gepresst wird, um den Presskörper zu erhalten.

Die Figur 3 zeigt eine dritte Ausführungsform eines erfindungsgemäßen Geflügelspielzeugs. Das Geflügelspielzeug besteht aus einem Presskörper 3 mit quaderförmiger Grundform. Der Presskörper 3 hat eine Höhe von 50 mm, eine Länge von 100 mm und eine Breite von 80 mm.

Der Presskörper 3 besteht zu 50 Volumenprozent aus Dinkelspelzen, zu 30 Volumenprozent aus Weizenstroh und zu 20 Volumenprozent aus einer Mischung aus Sand, pelletier Hilfsstoffen, Mineralien, ätherischen Ölen und Kräutern.

Der Presskörper 3 wurde hergestellt, indem die Weizenspelzen im gehäckselten Zustand zusammen mit den weiteren vorgenannten Bestandteilen unter Verwendung einer geeigneten Vorrichtung in die würfelförmige Form der angegebenen Dimensionierung bricketiert wurden.

Alternativ zu der dargestellten Ausführungsform kann der Presskörper beispielsweise anstelle der 30 Volumenprozent Weizenstroh 30 Volumenprozent Heu aufweisen.

Drei weitere Ausführungsbeispiele von erfindungsgemäßen Geflügelspielzeugen zeichnen sich ferner durch die vorstehend jeweils im Zusammenhang mit den Figuren 1 bis 3 beschriebenen Merkmale aus, wobei zusätzlich jeweils der Spelzen und/oder das Stroh und/oder das Heu des Presskörpers 1, 2, 3 mit einer Mischung aus Ameisensäure, Propionsäure, Essigsäure, Sorbinsäure sowie Ammoniumpropionat und Ammoniumformiat benetzt und/oder zumindest teilweise durchsetzt ist.

Der Spelzen bzw. das Stroh bzw. das Heu, die mit der Mischung benetzt und/oder zumindest teilweise durchsetzt sind, wurden dabei erhalten, indem der Spelzen und/oder das Stroh und/oder das Heu im unzerkleinerten bzw. zerkleinerten Zustand bereitgestellt und mit einer wässrigen Lösung aus der Mischung dieser Säuren in Kontakt gebracht wurde. Konkret wurde der Spelzen bzw. das Stroh bzw. das Heu bzw. eine Mischung aus diesen mit der wässrigen Lösung aus der Mischung von Säuren mit einer Konzentration von 0,5 % besprüht. Der Spelzen und/oder das Stroh und/oder das Heu wurden während des Besprühens durchmischt, um eine gleichmäßige Verteilung zu erzielen.

Der mit der wässrigen Lösung der Säuremischung behandelte Spelzen und/oder Stroh und/oder Heu bzw. die Mischung aus diesen wurde anschließend bricketiert, um den Presskörper zu erhalten.

Von jedem der in den Figuren 1 bis 3 dargestellten, jeweils durch die Presskörper 1, 2, 3 gebildeten Geflügelspielzeuge kann eines oder können mehrere auf dem Boden eines Käfigs, Stalls oder Geheges für Geflügel ausgelegt werden, damit die Tiere sich mit den Geflügelspielzeugen beschäftigen können.

Die Tiere werden durch die erfindungsgemäß verwendeten Materialien zum Picken der 1 Presskörper 1, 2, 3 angeregt. Die Tiere können die Presskörper 1, 2, 3 alternativ oder zusätzlich durch den Stall bzw. das Gehege bewegen, was sie ebenfalls beschäftigt hält. Die erfindungsgemäß verwendeten Materialien sind dabei besonders umweltfreundlich und für den direkten Kontakt mit den Tieren sehr gut geeignet.

Alternativ oder zusätzlich dazu, dass die Geflügelspielzeuge auf dem Boden eines Stalls oder Geheges ausgelegt werden, kann zu deren Bereitstellung auch ein erfindungsgemäßer Bereitstellungsbehälter zum Einsatz kommen.

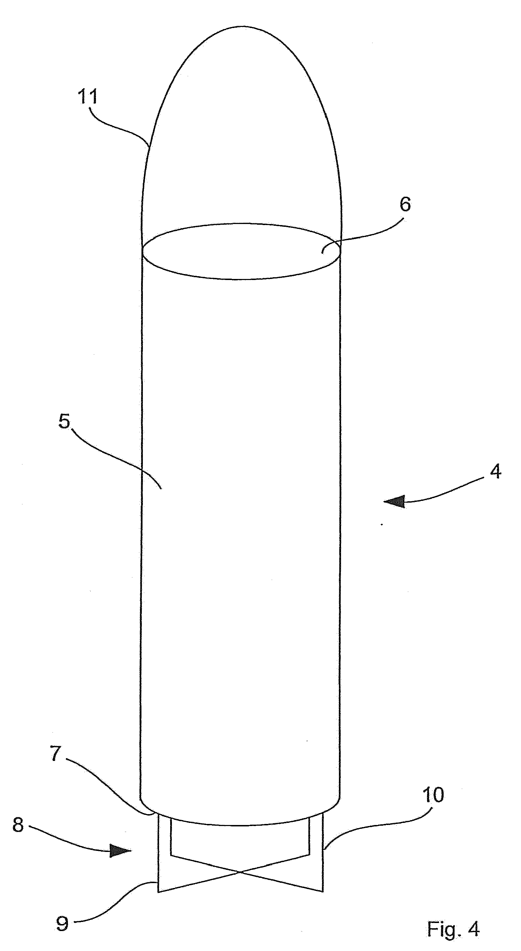

Für Geflügelspielzeuge, welche aus den in Figur 1 dargestellten Presskörpern 1 zylindrischer Grundform gebildet werden, kann die in Figur 4 dargestellte Ausführungsform eines erfindungsgemäßen Bereitstellungsbehälters 4 verwendet werden.

Der dargestellte Bereitstellungsbehälter 4 umfasst einen durch einen rohrförmigen Körper 5 definierten Vorratsbereich für Geflügelspielzeuge. Der rohrförmige Körper 5 weist bei der dargestellten Ausführungsform eine Länge von 500 mm und einen Durchmesser von 80 mm auf. Die obere Stirnseite 6 und die untere Stirnseite 7 des rohrförmigen Körpers 5 ist jeweils offen ausgebildet.

Der Bereitstellungsbehälter umfasst weiterhin einen unterhalb des durch den rohrförmigen Körper 5 definierten Vorratsbereiches vorgesehenen Bereitstellungsbereich, der durch eine offene Struktur definiert wird. Die offene Struktur ist bei dem dargestellten Ausführungsbeispiel durch einen Drahtkorb 8 gegeben, der wiederrum von zwei gebogenen Drähten 9, 10 aus Metall gebildet wird. Die freien Enden von jedem der beiden Drähte 9, 10 sind jeweils an dem rohrförmigen Körper 5 in der Nähe der unteren offenen Stirnseite 7 an der Wandung des Körpers 5 an gegenüberliegenden Wandungsbereichen befestigt und derart gebogen, dass sich von jedem Draht 9, 10 ein horizontaler Abschnitt unterhalb der offenen unteren Stirnseite 7 des rohrförmigen Körpers 5 in einem Abstand von 500 mm zu der unteren Stirnseite 7 erstreckt. Die horizontalen Abschnitte der beiden Drähte 9, 10 kreuzen sich unter einem Winkel von 90°.

Der Drahtkorb 8 weist - genau wie der rohrförmige Körper 5 - einen Durchmesser von 80 mm auf. Der Drahtkorb ist ferner 50 mm hoch.

Mittels der durch den Drahtkorb 8 mit den beiden Drähten 9, 10 gebildeten offenen Struktur, welche den Bereitstellungsbereich definiert, kann eines der in der Figur 1 dargestellten Geflügelspielzeuge unterhalb des rohrförmigen Körpers 5 von außen zugänglich für Tiere in einem Stall oder Gehege gehalten werden.

Der in Figur 4 dargestellte Bereitstellungsbehälter 4 umfasst ferner Mittel zum Aufhängen des Behälters. Bei diesen handelt es sich um einen weiteren Draht 11, welcher an dem rohrförmigen Körper 5 nahe dessen oberer Stirnseite 6 befestigt und in der Form einer Schlaufe gebogen ist. Die Schlaufe weist eine Höhe von 150 mm auf. Hierdurch ist gewährleistet, dass genügend Platz zur Verfügung steht, um zylindrische Presskörper 1 durch die obere offenen Stirnsete 6 des rohrförmigen Körpers 5 in den Vorratsbereich des Behälters 4 einzulegen.

Der Bereitstellungsbehälter 4 kann beispielsweise an einem in der Figur 4 nicht dargestellten Haken oder dergleichen aufgehängt werden, indem der gebogene Draht 11 in diesen eingehängt wird.

Wenn das Geflügel ein in dem Bereitstellungsbereich befindliches Geflügelspielzeug von außen pickt, wird der hängende Bereitstellungsbehälter 4 in Schwingung versetzt und die Tiere werden hierdurch stimuliert und beschäftigt.

In dem durch den rohrförmigen Körper 5 definierten Vorratsbereich können bei dem dargestellten Ausführungsbeispiel insgesamt zehn der in der Figur 1 dargestellten Presskörper 1 übereinandergestapelt vorgehalten werden.

In den durch den Drahtkorb 8 definierten Bereitstellungsbereich passt einer der Presskörper 1. Ist dieser vollständig aufgepickt, bzw. wird dieser infolge des Pickens zerlegt, so dass er aus dem Drahtkorb 8 in mehreren Teilen herausfällt, rutscht ein neuer Presskörper 1 aus dem rohrförmigen Körper 5 nach unten nach, wodurch der Bereitstellungsbereich erneut befüllt wird.

Da in dem Vorratsbereich des Bereitstellungsbehälters 4 zehn Presskörper 1 übereinandergestapelt vorgehalten werden können, ist ein Nachlegen von Presskörpern 1 nur in vergleichsweise langen Zeitabständen nötig ist.

## Patentansprüche

1. Geflügelspielzeug, umfassend einen oder bestehend aus einem Presskörper (1, 2, 3), der Spelzen wenigstens einer Getreideart und/oder Stroh wenigstens einer Getreideart und/oder Heu aufweist.

2. Geflügelspielzeug nach Anspruch 1, **dadurch gekennzeichnet, dass** der Presskörper (1, 2, 3) zu mindestens 20 Volumenprozent, insbesondere mindestens 30 Volumenprozent, bevorzugt mindestens 50 Volumenprozent und besonders bevorzugt mindestens 80 Volumenprozent aus Spelzen wenigstens einer Getreideart oder Stroh wenigstens einer Getreideart oder Heu besteht oder der Presskörper (1, 2, 3) zu mindestens 20 Volumenprozent, insbesondere mindestens 30 Volumenprozent, bevorzugt mindestens 50 Volumenprozent und besonders bevorzugt mindestens 80 Volumenprozent aus einer Mischung aus Spelzen wenigstens einer Getreideart und/oder Stroh wenigstens einer Getreideart und/oder Heu besteht.

3. Geflügelspielzeug nach einem der vorhergehenden Ansprüche, **dadurch gekennzeichnet, dass** es sich bei der wenigstens einen Getreideart um Dinkel und/oder Hafer und/oder Weizen und/oder Roggen und/oder Gerste und/oder Raps und/oder Miscanthus und/oder Hirse und/oder Reis und/oder Sorgum handelt.

4. Geflügelspielzeug nach einem der vorhergehenden Ansprüche, **dadurch gekennzeichnet, dass** die Spelzen und/oder das Stroh und/oder das Heu gehäckselt und/oder gemahlen sind.

5. Geflügelspielzeug nach einem der vorhergehenden Ansprüche, **dadurch gekennzeichnet, dass** der Presskörper (1, 2, 3) weiterhin Futtermittel und/oder Mineralien und/oder pelletier Hilfsstoffe und/oder Sand und/oder Kräuter aufweist.

6. Geflügelspielzeug nach einem der vorhergehenden Ansprüche, **dadurch gekennzeichnet, dass** der Presskörper (1, 2, 3) weiterhin wenigstens ein ätherisches Öl, insbesondere Zimt-Öl und/oder Pfefferminz-Öl und/oder Eukalyptus-Öl und/oder Oregano-Öl und/oder Lavendel-Öl und/oder Thymian-Öl aufweist.

7. Geflügelspielzeug nach einem der vorhergehenden Ansprüche, **dadurch gekennzeichnet, dass** der Spelzen wenigstens einer Getreideart und/oder das Stroh wenigstens einer Getreideart und/oder das Heu mit wenigstens einer Säure benetzt und/oder zumindest teilweise durchsetzt ist, wobei es sich bei der wenigstens einen Säure insbesondere um Essigsäure und/oder Peressigsäure und/oder Milchsäure und/oder Ameisensäure und/oder Propionsäure und/oder Sorbinsäure und/oder Phosphorsäure handelt.

8. Geflügelspielzeug nach einem der vorhergehenden Ansprüche, **dadurch gekennzeichnet, dass** der Spelzen wenigstens einer Getreideart und/oder das Stroh wenigstens einer Getreideart und oder das Heu mit Ammoniumpropionat und/oder Ammoniumformiat benetzt und/oder zumindest teilweise durchsetzt ist.

9. Geflügelspielzeug nach einem der vorergehenden Ansprüche, **dadurch gekennzeichnet, dass** der Presskörper (1, 2, 3) eine zylinderförmige Grundform und insbesondere eine Höhe im Bereich von 10 mm bis 500 mm und/oder einen Durchmesser im Bereich von 5 mm bis 500 mm, insbesondere im Bereich von 50 mm bis 150 mm aufweist oder der Presskörper (1, 2, 3) eine quaderförmige Grundform aufweist und insbesondere gerundete Kanten und/oder Ecken und/oder eine Länge im Bereich von 10 mm bis 1.000 mm und/oder eine Breite im Bereich von 5 mm bis 500 mm und/oder eine Höhe im Bereich von 10 mm bis 500 mm aufweist oder der Presskörper (1, 2, 3) eine würfelförmige Grundform aufweist und insbesondere die Kantenlänge des Presskörpers (1, 2, 3) im Bereich von 10 mm bis 1.000 mm liegt oder der Presskörper (1, 2, 3) eine kugelförmige Grundform und insbesondere einen Durchmesser im Bereich von 5 mm bis 500 mm aufweist.

10. Bereitstellungsbehälter (4) für Geflügelspielzeuge nach einem der Ansprüche 1 bis 9, umfassend einen Vorratsbereich, in welchem mehrere Geflügelspielzeuge nach einem der Ansprüche 1 bis 9 übereinander gestapelt vorgehalten werden können, und einen unterhalb des Vorratsbereiches vorgesehenen Bereitstellungsbereich, welcher derart ausgestaltet ist, dass ein in dem Bereitstellungsbereich befindliches Geflügelspielzeug von außen für Tiere zugänglich ist, wobei insbesondere eine Wandung des Bereitstellungsbehälters (4) in dem Bereitstellungsbereich wenigstens eine Öffnung aufweist, durch welche ein in dem Bereitstellungsbereich befindliches Geflügelspielzeug von außen für Tiere zugänglich ist.

11. Bereitstellungsbehälter (4) nach Anspruch 10, umfassend einen den Vorratsbereich definierenden rohrförmigen Körper (5), dessen untere Stirnseite (7) offen ausgebildet ist und eine den Bereitstellungsbereich definierende, sich an das untere Ende des rohrförmigen Körpers (5) anschließende offene Struktur (8), durch welche ein in dem Bereitstellungsbereich befindliches Geflügelspielzeug von außen für Tiere zugänglich ist, wobei insbesondere die den Bereitstellungsbereich definierende offene Struktur (8) durch einen oder mehrere gebogene Drähte (9, 10) oder Stege gebildet wird und/oder die offene Struktur (8) an dem unteren Ende des rohrförmigen Körpers (5) lösbar befestigt ist, so dass diese abgenommen werden kann, um den Bereitstellungsbehälter (4) von der Unterseite mit Geflügelspielzeugen zu befüllen.

12. Bereitstellungsbehälter (4) nach Anspruch 11, **dadurch gekennzeichnet, dass** der rohrförmige Körper (5) an seiner oberen Stirnseite (6) offen ausgebildet ist, so dass der Bereitstellungsbehälter (4) von der Oberseite mit Geflügelspielzeugen befüllt werden kann und/oder der rohrförmige Körper (5) einen runden oder quadratischen oder rechteckigen Querschnitt aufweist und/oder dass der rohrförmige Körper (5) eine Länge im Bereich von 300 mm bis 700 mm, insbesondere im Bereich von 400 mm bis 600 mm und/oder dass der rohrförmige Körper (5) einen Durchmesser im Bereich von 50 mm bis 110 mm, insbesondere im Bereich von 60 mm bis 100 mm aufweist.

13. Bereitstellungsbehälter (4) nach einem der Ansprüche 10 bis 12, **dadurch gekennzeichnet, dass** Mittel zum Aufhängen des Bereitstellungsbehälters (4) vorgesehen sind.

14. Kit umfassend wenigstens ein Geflügelspielzeug nach einem der Ansprüche 1 bis 9 und einen Bereitstellungsbehälter (4) für Geflügelspielzeuge nach einem der Ansprüche 10 bis 13.

15. Verwendung eines Presskörpers (1, 2, 3), der Stroh wenigstens einer Getreideart und/oder Spelzen wenigstens einer Getreideart und/oder Heu aufweist, als Spielzeug für Geflügel.
